# EUROPEAN PATENT SPECIFICATION

(11) **EP 2 368 101 B1**
(45) Date of publication and mention of the grant of the patent: **10.10.2018**
(21) Application number: 09835342.8
(22) Date of filing: 22.12.2009
(51) Int. Cl.: G01L 25/00, G01L 5/24

(54) **METHOD, DEVICE, SYSTEM AND COMPUTER PROGRAM PRODUCT FOR EVALUATING A POWER TOOL**
VERFAHREN, VORRICHTUNG, SYSTEM UND COMPUTERPROGRAMMPRODUKT ZUR BEWERTUNG EINES ELEKTROWERKZEUGS
PROCÉDÉ, DISPOSITIF, SYSTÈME ET PROGRAMME INFORMATIQUE POUR ÉVALUER UNE MACHINE-OUTIL

(30) Priority: 23.12.2008 SE 0802662
(43) Date of publication of application: 28.09.2011
(73) Proprietor: Atlas Copco Industrial Technique AB, 105 23 Stockholm (SE)
(72) Inventor: JÖNGREN, Henric, Per, Johan, S-115 37 Stockholm (SE); PERSSON, Lars, Magnus, SE-117 59 Stockholm (SE)
(74) Representative: Tholin, Thomas
(86) International application number: PCT/SE2009/000535
(87) International publication number: WO 2010/074628

(56) References cited:
- EP-A2- 1 063 061
- WO-A1-2007/038769
- GB-A- 2 438 874
- JIA-HUA LIN ET AL: "Hand-Handle Interface Force and Torque Measurement System for Pneumatic Assembly Tool Operations: Suggested Enhancement to ISO 6544", JOURNAL OF OCCUPATIONAL AND ENVIRONMENTAL HYGIENE, vol. 4, no. 5, 26 March 2007 (2007-03-26), pages 332-340, XP055263323, US ISSN: 1545-9624, DOI: 10.1080/15459620701285644
- KIHLBERG S ET AL: "Discomfort from pneumatic tool torque reaction: Acceptability limits", INTERNATIONAL JOURNAL OF INDUSTRIAL ERGONOMICS, ELSEVIER, AMSTERDAM, NL, vol. 15, no. 6, 1 June 1995 (1995-06-01), pages 417-426, XP003026440, ISSN: 0169-8141, DOI: 10.1016/0169-8141(94)00059-C
- "ISO 6544:1981 Hand-held pneumatic assembly tools for installing threaded fasteners - Reaction torque and torque impulse measurments", ISO STANDARD, ISO, CH, vol. ISO 6544:1981, 1 January 1981 (1981-01-01), pages 1-7, XP008179686,
- KIHLBERG S. ET AL: 'Discomfort from pneumatic tool torque reaction: Acceptability limits' INTERNATIONAL JOURNAL OF INDUSTRIAL ERGONOMICS vol. 15, no. 6, June 1995, ISSN 0169-8141 pages 417 - 426, XP003026440
- Atlas Copco: "Power Focus 3000/3100/3102/4000 Control and Drive unit for TENSOR Electric Nutrunners", , 1 April 2007 (2007-04-01), XP055324130, Retrieved from the Internet: URL:http://www.kenrichindustrial.com/files /5813/9384/9197/PF4000_W7_2007_04.pdf [retrieved on 2016-11-29]

## Description

### Technical Field

The present invention relates to a method, device, system and computer program product for evaluating a portable electric power wrench.

### Background

Power tools, including portable electric power wrenches such as power wrenches operated by an operator are commonly used in production work, for instance in assembly lines. More sophisticated such portable electric power wrenches typically find application where production quality control has high priority such as assembly lines for security products for the automotive industry including assembly lines for air bag products or the like. These more sophisticated portable electric power wrenches are typically connected to a control system, such as a so-called "drive", for control and/or presentation of a number of operational parameters and power supply of the tool. Examples of operational parameters are torque, angles (including motor angles) etc.

Until now, evaluation of power tools, including testing of the same, is typically provided by means of some test procedure being focused mainly on evaluating tool performance such as calibration of tool, proper assembly torque being provided by tool, wear of tool within tolerance etc. According to our best knowledge, there is little focus directed to the operators of portable electric power wrenches, in particular operator experienced reaction torque when fastening a screw joint, despite the fact that this task is typically very important firstly as regards the operators long-term health, including all types of ergonomic requirements and secondly as regards the cost in terms of efficiency of operator training. There could even be product quality problems due to bad ergonomic conditions, problems could be significant.

Today, typically a large number of test screw joints, or "real" screw joints, each providing a certain reaction torque when fastened are required to simulate a corresponding number of real assembly situations, in particular to be able to simulate operator felt reaction torque when a screw joint, such as a nut and bolt, is tightened.

Problems concerned with all the evaluation methods of the above type are that they typically involve a rather tricky and time consuming operation. In practice, it is often even impossible to be able to simulate all situations desirable, since these would require too many screw joint set-ups and/or would take too long time to operate on, for instance because the operator has to shift between a large number of screw joints. Some operators may in a worst case even be afraid of their own portable electric power wrenches in case they have never been able to test how it feels to fasten a particular screw joint before having to do so in a real situation. In a real assembly situation, this may even result in injuries for instance because of unexpected too high reaction torque. The known evaluation methods are sometimes also rather expensive to perform. Furthermore, because the screw joints have to be loosened, the evaluation is interrupted; or in worst case they are worn out, which of course are drawbacks.

### Summary of the invention

It is an object of the present invention to provide an evaluation method, device, system and computer program product by which all the above problems are avoided or at least reduced, providing frequent, inexpensive and fast evaluation of screw joints, where focus is directed to the operator of a power tool.

According to a first aspect of the present invention there is provided a method for evaluating, in particular minimizing, ergonomic strain experienced by an operator using a power tool to tighten a real screw joint of a certain reaction torque characteristics and/or location(s) on an object to be assembled. The method comprises the steps of:
- providing a test rig with a test screw joint simulating the screw joint on the object to be assembled;
- controlling the power tool to simulate a torque ramp response phase over time so that the torque over time gives a reaction torque equivalent to what the operator would have experienced on a real screw joint.

Herein, the term "evaluating" includes testing, evaluating, and minimizing.

Herein, the term "real" screw joint means any screw joint suitable for assembly, and the term "test" screw joint means a screw joint means suitable for simulation of a real screw joint. The test screw joint does not have to be suitable for assembly, but only suitable for simulation. Further definitions and examples of these terms will follow.

Typically, the method comprises the further steps of:
- having the operator indicate the experienced strain caused by the reaction torque from the power tool at tightening the test screw joint of the test rig;
- adapting the values of the power tool output parameters during tightening of the screw joint of the test rig to minimize the strain experienced by the operator, and
- storing the adapted power tool output parameter values for use at tightening the real screw joint at the object to be assembled.

In this way, torque/angle characteristics (motor angle) are transformed into torque/time characteristics such that a single test screw joint could be used in a large number of simulations of real screw joints.

Yet another advantage with the present invention is that it is possible to trim the tightening process by finding optimum tightening strategy for a specific operator of a power tool, or alternatively a standard tightening strategy providing shorter time to process. This is not possible by means of existing technology.

Yet another advantage with the present invention is that it is possible to evaluate quality and production parameters for different tightening procedures during simulation. This provides the possibility to find optimum strategy in case these parameters are contradictory to each other.

According to another aspect of the present invention, there is provided a method for evaluating, in particular minimizing, the ergonomic strain experienced by an operator using a screw joint tightening power tool to tightening screw joints of different reaction torque characteristics and/or locations on an object to be assembled, comprising the steps of
- providing a test rig with test screw joints simulating the characteristics and/or
   positions of the screw joints of the object to be assembled,
- letting the operator apply a tightening torque on each one of the test screw joints of the test rig by means of the power tool,
- having the operator indicate the experienced strain caused by the reaction torque from the power tool at tightening each one of the test screw joints of the test rig,
- adapting the development of the power tool output parameters during tightening of each test screw joint of the test rig to minimize the strain experienced by the operator, and
- storing the optimum power tool output parameter development for each screw joint for adapting the reaction torque experienced by the operator during tightening of each one of the real screw joints on the object to be assembled.

Herein, the term "real screw joint" is by no means limited to a particular type of screw joint, but any screw joint suitable for use in real assembly could be used.

Herein, the term "test screw joint" includes a means that is capable of receiving driving torque of a power tool without any angular displacement of the joint. Any type of means adapted to receive the drive part of a power tool and being capable of receiving the driving torque could be used. Typically, torque versus angle for a particular test screw joint has to be known. A particular torque versus time could be calculated based on known torque versus angle if velocity of axle, herein referred to as "drive part" is known. Typically the test screw joint is fix.

Herein, the term "drive part" includes any rotatable part of the power tool typically including an outgoing shaft provided with a square drive part, or in other words drive part could be a drive axle, drive shaft, of which all are well known per se. The drive part may also be a nut and socket mounted thereon.

According to another aspect of the present invention, there is provided a drive unit device communicating with a power tool, controlling and powering the tool. The drive unit device comprises circuitry for providing the power tool to simulate a torque ramp phase over time such that an operator using the power tool to tighten a real screw joint of a certain reaction characteristics and/or locations of an object to be assembled experiences a resulting reaction torque response from the test screw joint when triggering the power tool to tighten the test screw joint. The invention is also related to a system comprising such a drive unit device.

The invention is also related to a computer program product storing executable code in the circuitry of the drive unit. The computer program product is arranged to implement part of the test method for a power tool described above when executed.

Typically, the inventive evaluation method, drive unit device, system and computer program product could be used for test of operation (ergonomic) of portable electric power wrenches and for training purposes, typically when implementing a new assembly line, or training operators. Typically, the invention provides a simulator for ergonomic requirements of an operator. In this way, a non-expensive and fast evaluation of portable electric power wrenches could be provided.

Additional features and advantages of the present invention are disclosed by the appended from the following specification and dependent claims.

### Brief description of the drawings

To further explain the invention, embodiments chosen as examples will now be described in greater details with reference to the drawings of which:
Fig. 1 shows a test system including a power tool and a drive unit according to an embodiment of the invention.
Fig. 2 is a flow-chart showing the method according to an embodiment of the present invention.
Fig. 3a graphically shows a plot of rotational speed versus time.
Fig. 3b graphically shows a plot of torque versus time.

### Description of embodiments of the invention

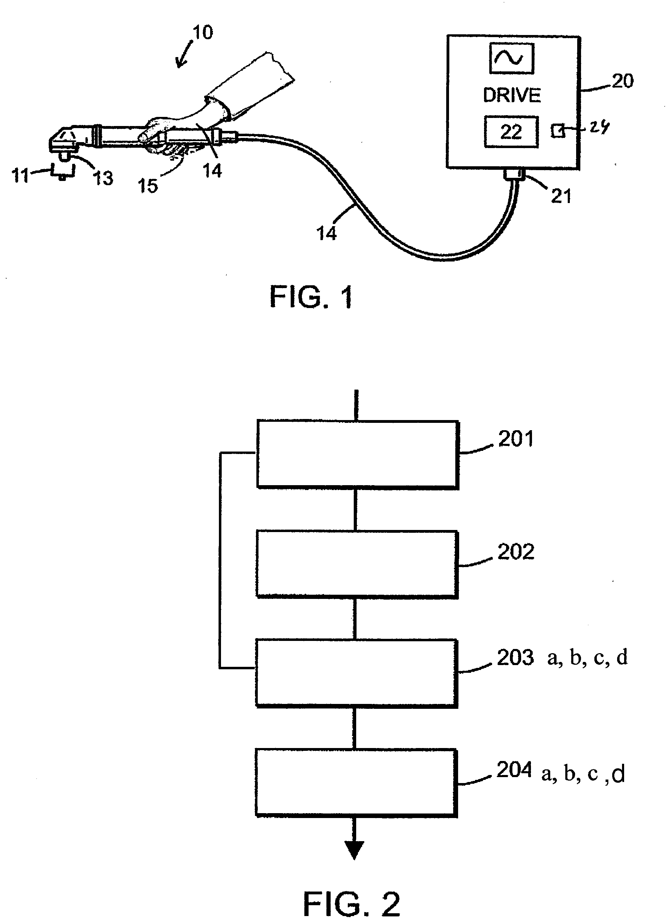

Now is referred to Fig. 1, which shows an embodiment of the present invention, embodied as system 10 for minimizing the ergonomic strain experienced by an operator using a screw joint tightening power tool to tightening screw joints of different reaction torque characteristics and/or locations on an object to be assembled. The system 10 comprises a test screw joint 11 for a power tool 12. The test screw joint 11 is adapted to receive a drive part 13 of the power tool 12 and hence to receive a driving torque from the power tool 12 when triggered by an operator (of which only a hand 14 is shown) pressing a trigger 15. The test screw joint 11 holds the drive part 13 firm, which could rotate in a free position, i. e. when not inserted in test screw joint 11. The test screw joint 11 is typically embodied, for instance as a socket, adapted to receive a drive part 13 in the form of a tap of the power tool 12, but could alternatively be embodied in the form of a nut. In the latter case, the power tool 12 must be provided with a corresponding socket. This latter case is not shown since it is obvious for a person skilled in the art to design outgoing from Fig. 1.

The test screw joint used for simulation could be of any suitable type, provided that its torque versus angle characteristics is known. An advantage with a rigid, i. e. a non-rotating, test screw joint is that it is not necessary to loosen the same during evaluation of the power tool. An alternative non-rigid test screw joint could be applied in case down-winding (of screw) should be evaluated. Furthermore, by means of this alternative test screw joint it could also be possible to evaluate insertion of a screw into the screw joint before down-winding the same. This may in some cases be of importance, because one would like to investigate bad sight conditions, or bad mounting conditions, in particular as regards ergonomic conditions. In case a rigid test screw joint is employed, the down-winding phase could be simulated by means of the tool providing a delay in build up of torque. Yet another alternative could be to simulate nuts having a locking means in the form of a nylon lining. These types of nuts could be simulated by providing a prevailing torque.

The test system 10 also comprises a drive unit device 20 provided with circuitry 22 for signal communication with and provided for power supply (electric) of the power tool 12. The drive unit device 20 is arranged to provide the power tool 12 to simulate a torque T ramp phase over time (t) such that an operator experiences a resulting reaction torque T response, similar or equivalent to the torque response of the real joint to be evaluated, from the test screw joint 11 when triggering the power tool 12 to tighten the test screw joint 11. The drive unit device 20 is arranged to transform torque/angle characteristics into torque/time characteristics. This transform is provided by means of circuitry 22 comprising a computer program product storing executable code in the circuitry 22, providing this when executed. The build up of torque T versus rotational speed of the output tap (the rotational speed of the particular tightening strategy chosen that is evaluated for the real joint that is evaluated), herein the drive part, 13 will be transformed into torque T versus time t. This implies that the build up of torque T will be independent of rotational speed of the output drive part such that the tap could be stationary in relation to the surrounding, i. e. the test screw joint. Alternatively, it is also possible to inversely transform torque T over time t to rotational speed over torque T/time t.

By means of this system, ergonomic strain experienced by an operator using a screw joint tightening power tool to tightening screw joints of different reaction torque characteristics and/or locations on an object to be assembled, could be evaluated, typically minimised.

Typically, the drive unit device also comprises circuitry for treating electric signals, including receiving and emitting signals. Typically, the computer program product also comprises executable code arranged to provide a suitable operator interface, in particular to assist an operator to perform the evaluation method described. This is not described or illustrated in detail since it is obvious for a person skilled in the art to implement, typically by means of hard ware components known per se together with inventive software. The latter will be described as follows.

The angle α is typically provided as a motor angle. Typically, the power tool 12 is connected to the drive unit device 20 by means of conventional cable connections 14 via an interface unit 21. The drive unit device 20 is typically a stationary control unit embodied as a so-called "drive". Herein, the term "stationary" also includes portable to some extent such that the drive could be moved around, but typically not during operation thereof. Typically, the drive unit device 20 is based on a programmable drive known per se. A processor and memory arrangement suitable for implementing the present invention by means of software is typically provided in present drives.

The invention is suitably carried out by means of using a portable power tool 12 such as a portable electric power wrench which is connected to the control unit 20 also having a control system and means for supplying a suitable drive current (voltage) to the power tool 12. Typically, the voltage output of this control unit should have a variable frequency and voltage magnitude (or current) for varying torque output of the power wrench.

Now is also referred to Fig. 2. Fig. 2 is a flow-chart showing the method according to an embodiment of the present invention, which could be implemented by means of the system described in relation to Fig. 1.

In a first step, a test screw joint being adapted to receive a drive part 13 of a power tool 12 is provided. The drive part 13 provides driving torque T from the power tool 12, step 201. The characteristics of the test screw joint to be evaluated could for instance be measured by means of a torque/angle transducer or be provided as a particular torque/angle relation by means of a graphical interface (not shown).
In a next step, the drive unit 20 provides the power tool to simulate a torque ramp phase over time such that the operator experiences a resulting reaction torque response similar as from the real screw joint when triggering the power tool to tighten the test screw joint, step 203a. The torque ramp is provided by transforming torque/angle characteristics into torque/time characteristics. In this way, to an operator, the test screw joint 11 feels like a real joint being tightened.

By detecting the motor angle, typically requiring a fix test screw joint, the velocity (rotational speed) β', as well as the acceleration magnitude β" of the rotating parts 13 and 11 may be determined, and by using the acceleration magnitude β" thus calculated and the total mass inertia I of the rotating part, the torque T transferred to the power tool 11 may be determined. Alternatively, in case of non-fix test screw joints, it is also possible, or typically required, to use an accelerometer or gonimeter. However, none, of these alternatives are described as they are obvious to a person skilled in the art.

This is typically provided by detecting the motor angle and calculating the reaction torque. All of this is provided by means of the drive unit 20.

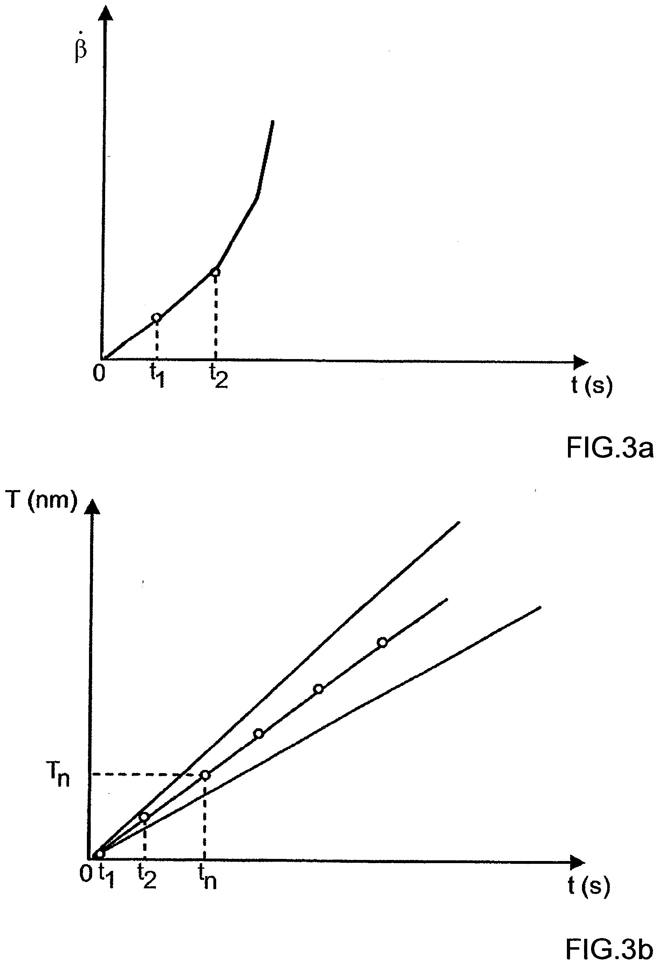

This is shown in Fig. 3a-b, of which Fig. 3a shows velocity β' versus time t and Fig. 3b shows torque T versus time t. In Fig. 3b, six torque parameter values Tn are shown. These are only intended to exemplify the invention and are by no means limiting the scope thereof to this particular number of values. Thus, another number of values may also be possible. Typically, but not always, the relation of torque T versus time t is essentially linear. For instance, during two-step tightening and so-called "zoom step" tightening there is no linear relation.

Typically, the inventive method further comprises the steps of
- having the operator indicate the experienced strain caused by the reaction torque from the power tool at tightening the test screw joint of the test rig, step 203b; This may include -transforming the real joint's torque/angle characteristics and spindle speed to torque/time
- adapting the values of the power tool output parameters during tightening of the screw joint of the test rig to minimize the strain experienced by the operator, step 203c. This may include inversely transforming the achieved/optimal control parameters back to torque vs. angle /angle speed and
- storing the adapted power tool output parameter values for use at tightening the screw joint at the object to be assembled, step 203d.

Alternatively, in step 203c, adapting the values of the power tool output parameters could be provided to find the most suitable compromise for a particular tightening strategy as a function of ergonomics, quality or productivity in case they are conflicting.

Typically, the inventive method further comprises the step of during a particular initial time period simulating the running down period, in which the operator experiences screwing a screw in threads or a nut on a bolt before the actual tightening the joint, step 202.

The inventive method may comprise the further step of simulating a test screw joint sequence including a plurality of test screw joints, each providing different reaction torque responses, step 204.

In this case, the inventive method comprises the steps of:
- providing a test rig with screw joints simulating varying characteristics and/or
   positions of the screw joints of the object to be assembled, step 202

- letting the operator apply a tightening torque on each one of the screw joints of the test rig by means of the power tool, step 204a
- having the operator indicate the experienced strain caused by the reaction torque from the power tool at tightening each one of the screw joints of the test rig, step 204b
- adapting the development of the power tool output parameters during tightening of each screw joint of the test rig to minimize the strain experienced by the operator, step 204c and
- storing the optimum power tool output parameter development for each screw joint for adapting the reaction torque experienced by the operator during tightening of each one of the screw joints on the object to be assembled, step 204d.

The testing could be carried out with respect to the minimum number of tightening operations required for operator as well as statistical security, say 5 tightening operations applied to the same test screw joint. Since the joint does not have to be loosened this could be done very easily without disturbing the operator or wearing out the joint. The testing could also be performed with respect to an expected tolerance of variations in joint characteristics, say ± 5 %, or 50 Nm (these values are only given as examples and not intended to be limiting). Also off-set errors or the like could be compensated for. In order not to stop the assembly line this is usually done during the regular assembly work, for instance by slowing down the assembly line. Alternatively, the power tool could be lifted out of production for evaluation.

Typically, the simulation could be further verified by using the tightening strategy on a real joint of the same type as has been simulated and in the same position as the simulation. Typically, the drive unit 20, and the tool 12, used during simulation is the same drive unit 20, and tool 12 used for real assembly. Because of practical reasons, there could be some differences in the software (of the drive unit) used for simulation and real assembly.

The inventive method may comprise the further step of adapting the torque ramp phase to provide a plurality of torque values T sufficient to cover an operational range of the power tool, step 204. Furthermore, an analysis could be carried out with respect to a number of tightening parameters including statistical quality and productivity parameters.

Moreover, control data could be communicated between the test unit and the power tool for adjusting power tool parameters.

Typically, the inventive method is partly implemented by a computer program product storing executable code 24 in the circuitry 22 of the drive unit 20, when executed arranged to perform at least the step of simulating a torque ramp phase over time such that the operator experiences a resulting reaction torque response corresponding to that from the real the joint when triggering the power tool to tighten the test screw joint.

The portable electric power wrench 12 may comprise one or more additional torque and/or angle sensors 16. By means of this additional sensor a redundant system 10 could be provided. Examples of sensors are the angle sensor of the motor of the tool, external accelerometers, gonimeters, gyros etc.

The invention could also be employed for testing auxiliary equipment, for instance which type of mounting being suitable, dimensioning of torque receiving arm or counter part (stop part), or to check mounting positions of auxiliary equipment.

## Claims

1. A method for evaluating ergonomic strain, caused by reaction torque, experienced by an operator when using a portable electric power wrench (12) to tighten a real screw joint to a certain torque at a certain location(s) on an object to be assembled,
**characterised in that** the method further comprises the steps of:
- providing a test rig with at least one test screw joint (11) simulating the screw joint on the object to be assembled, step 201;
- controlling the portable electric power wrench (12) with an electrical drive unit device (20) to simulate a torque ramp response phase over time so that the torque over time gives a reaction torque equivalent to what the operator would have experienced on a real screw joint, step 203a.

2. The method according to claim 1, wherein the torque ramp is provided by transforming torque/angle characteristics into torque/time characteristics, step 203a.

3. The method according to claim 1, further comprising the steps of:
- having the operator indicate the experienced strain caused by the reaction torque from the portable electric power wrench (12) at tightening the test screw joint (11) of the test rig, step 203b;
- storing adapted power tool control parameters values for use at tightening the real screw joint at the object to be assembled, step 203d.

4. The method according to claim 3, comprising the steps of:
- having the operator indicate the experienced strain caused by the reaction torque from the portable electric power wrench (12) at tightening the test screw joint (11) of the test rig, step 203b;
- transforming the real joint's torque/angle characteristics and spindle speed to torque/time
- storing corresponding control parameters in the power tool controller for evaluating the strain experienced by the operator, step 203c and
- inversely transforming the achieved/optimal control parameters back to torque vs. angle /angle speed followed by
- storing adapted portable electric power wrench (12) control parameters values for use at tightening the real screw joint at the object to be assembled, step 203d.

5. The method according to claim 1, comprising the further step of during a particular initial time period simulating the running down period in which the operator experiences the process of screwing a fastening means in threads before tightening the joint, step 202.

6. The method according to any one of the claims 1-3, comprising the further step of simulating a test screw joint (11) sequence including a plurality of test screw joints (11), each providing different reaction torque responses, step 204.

7. The method according to claim 4, comprising the steps of:
- letting the operator apply a tightening torque on each one of the screw joints of the test rig by means of the portable electric power wrench , step 204a
- having the operator indicate the experienced strain caused by the reaction torque from the portable electric power wrench (12) at tightening each one of the screw joints of the test rig, step 204b
- adapting the development of the portable electric power wrench (12) output parameters during tightening of each screw joint of the test rig to minimize the strain experienced by the operator, step 204c and
- storing the optimum portable electric power wrench (12) output parameter development for each screw joint for adapting the reaction torque experienced by the operator during tightening of each one of the screw joints on the object to be assembled, step 204d.

8. The method according to claim 4 or 5, comprising simulating a sequence of at least five test screw joints (11), step 204.

9. The method according to any one of the claims 1-5, comprising the step of adapting the torque ramp phase to provide a plurality of torque values (T) sufficient to cover an operational range of the portable electric power wrench (12).

10. An electrical drive unit (20) device communicating with a portable electric power wrench (12), said electrical drive unit device (20) comprising circuitry (22) configured for providing the portable electric power wrench (12) to simulate a torque (T) ramp phase over time (t), **characterised in that** when, an operator is using the portable electric power wrench (12) to tighten at least one test screw joint (11), being provided at a test rig, of a certain reaction characteristics and/or locations of an object to be assembled, said operator experiences a resulting reaction torque (T) response from the test screw joint (11) when triggering the portable electric power wrench (12) to tighten the test screw joint (11).

11. A system for evaluating the ergonomic strain experienced by an operator using a screw joint tightening portable electric power wrench (12) to tightening a real screw joint of a certain reaction torque characteristics and/or locations on an object to be assembled, **characterised in that** the system comprises
- a test screw joint (11) being adapted to receive a drive part (13) of a portable electric power wrench (12), said drive part (13) providing driving torque (T) from the portable electric power wrench (12);
- a drive unit (20) communicating with the portable electric power wrench (12) comprising circuitry (22) for controlling the portable electric power wrench (12) to simulate a torque (T) ramp response phase over time (t) so that the torque (T) over time (t) gives a reaction torque equivalent to what the operator would have experienced on a real screw joint.

12. A computer program product comprising executable code (24) stored in the circuitry (22) of the drive unit (20)according to claim 11, when executed the drive unit (20) performs the steps of:
- providing power to the portable electric power wrench (12) to simulate a torque ramp phase over time such that the operator experiences a resulting reaction torque response from the joint when triggering the portable electric power wrench (12) to tighten the test screw joint (11).

## Patentansprüche

1. Verfahren zum Bewerten von ergonomischer Belastung, die durch ein Reaktionsmoment verursacht wird und von einer Bedienperson bei Verwendung einer portablen Elektroschraubmaschine (12) zum Festschrauben einer realen Schraubverbindung auf ein bestimmtes Drehmoment an einer bestimmten Stelle bzw. an bestimmten Stellen auf einem zu montierenden Gegenstand wahrgenommen wird,
**dadurch gekennzeichnet, dass** das Verfahren ferner die Schritte umfasst zum:
- Bereitstellen einer Prüfanlage mit mindestens einer Prüfschraubverbindung (11), die die Schraubverbindung am zu montierenden Gegenstand simuliert, Schritt 201;
- Steuern der portablen Elektroschraubmaschine (12) mit einer elektrischen Antriebseinheitsvorrichtung (20), um eine Reaktionsphase mit Drehmomentrampe im Zeitverlauf zu simulieren, sodass das Drehmoment im Zeitverlauf ein Reaktionsmoment ergibt, das dem von der Bedienperson an einer realen Schraubverbindung wahrgenommenen Drehmoment äquivalent ist, Schritt 203a.

2. Verfahren nach Anspruch 1, wobei die Drehmomentrampe durch Transformieren von Drehmoment/Winkel-Kennlinien in Drehmoment/Zeit-Kennlinien bereitgestellt wird, Schritt 203a.

3. Verfahren nach Anspruch 1, ferner die Schritte umfassend zum:
- Veranlassen, dass die Bedienperson die wahrgenommene Belastung angibt, die durch das Reaktionsmoment von der portablen Elektroschraubmaschine (12) beim Festschrauben der Prüfschraubverbindung (11) der Prüfanlage verursacht wird, Schritt 203b;
- Speichern von angepassten Elektrowerkzeug-Steuerparameterwerten zur Verwendung beim Festschrauben der realen Schraubverbindung am zu montierenden Gegenstand, Schritt 203d.

4. Verfahren nach Anspruch 3, die Schritte umfassend zum:
- Veranlassen, dass die Bedienperson die wahrgenommene Belastung angibt, die durch das Reaktionsmoment von der portablen Elektroschraubmaschine (12) beim Festschrauben der Prüfschraubverbindung (11) der Prüfanlage verursacht wird, Schritt 203b;
- Transformieren der Drehmoment/Winkel-Kennlinien der realen Verbindung und einer Spindeldrehzahl in Drehmoment/Zeit
- Speichern entsprechender Steuerparameter in der Elektrowerkzeugsteuerung zum Bewerten der von der Bedienperson wahrgenommenen Belastung, Schritt 203c, und
- umgekehrtes Transformieren der erzielten/optimalen Steuerparameter zurück in Drehmoment versus Winkel/Winkelgeschwindigkeit gefolgt von
- Speichern von angepassten Steuerparameterwerten der portablen Elektroschraubmaschine (12) zur Verwendung beim Festschrauben der realen Schraubverbindung am zu montierenden Gegenstand, Schritt 203d.

5. Verfahren nach Anspruch 1, das den weiteren Schritt, während eines bestimmten Anfangszeitraums, zum Simulieren der Auslaufzeit umfasst, in der die Bedienperson den Prozess zum Schrauben eines Befestigungsmittels in Gewinde vor Festschrauben der Verbindung wahrnimmt, Schritt 202.

6. Verfahren nach einem der Ansprüche 1-3, das den weiteren Schritt zum Simulieren einer Abfolge von Prüfschraubverbindungen (11) umfasst, die eine Vielzahl von Prüfschraubverbindungen (11) enthält, die jeweils ein unterschiedliches Reaktionsmomentverhalten bereitstellen, Schritt 204.

7. Verfahren nach Anspruch 4, die Schritte umfassend zum:
- Veranlassen, dass die Bedienperson mithilfe der portablen Elektroschraubmaschine ein Drehmoment zum Festschrauben auf jede der Schraubverbindungen der Prüfanlage anwendet, Schritt 204a
- Veranlassen, dass die Bedienperson die wahrgenommene Belastung angibt, die durch das Reaktionsmoment von der portablen Elektroschraubmaschine (12) beim Festschrauben jeder der Prüfschraubverbindungen der Prüfanlage verursacht wird, Schritt 204b
- Anpassen der Entwicklung der Ausgabeparameter der portablen Elektroschraubmaschine (12) beim Festschrauben jeder Prüfschraubverbindung der Prüfanlage, um die von der Bedienperson wahrgenommene Belastung zu minimieren, Schritt 204a, und
- Speichern der optimalen Ausgabeparameterentwicklung der portablen Elektroschraubmaschine (12) für jede Schraubverbindung zum Anpassen des von der Bedienperson beim Festschrauben jeder der Schraubverbindungen des zu montierenden Gegenstands wahrgenommenen Reaktionsmoments, Schritt 204d.

8. Verfahren nach Anspruch 4 oder 5, das ein Simulieren einer Abfolge von mindestens fünf Prüfschraubverbindungen (11) umfasst, Schritt 204.

9. Verfahren nach einem der Ansprüche 1-5, das den Schritt zum Anpassen der Drehmomentrampenphase umfasst, um eine Vielzahl von Drehmomentwerten (T) bereitzustellen, die ausreicht, um einen Betriebsbereich der portablen Elektroschraubmaschine (12) abzudecken.

10. Elektrische Antriebseinheitsvorrichtung (20), die mit einer portablen Elektroschraubmaschine (12) kommuniziert, wobei die elektrische Antriebseinheitsvorrichtung (20) Verschaltung (22) umfasst, die ausgelegt ist, die portable Elektroschraubmaschine (12) zu versorgen, um eine Rampenphase eines Drehmoments (T) im Zeitverlauf (t) zu simulieren,
**dadurch gekennzeichnet, dass**, wenn eine Bedienperson die portable Elektroschraubmaschine (12) verwendet, um mindestens eine Prüfschraubverbindung (11) festzuschreiben, die an einer Prüfanlage bereitgestellt wird, mit einer bestimmten Reaktionskennlinie und/oder bestimmten Positionen eines zu montierenden Gegenstands, wobei die Bedienperson beim Auslösen der portablen Elektroschraubmaschine (12), um die Prüfschraubverbindung (11) festzuschrauben, ein resultierendes Reaktionsmomentverhalten (T) von der Prüfschraubverbindung (11) wahrnimmt.

11. System zum Bewerten der ergonomischen Belastung, die von einer Bedienperson bei Verwendung einer Schraubverbindungen festschraubenden, portablen Elektroschraubmaschine (12) wahrgenommen wird, um eine reale Schraubverbindung mit einer bestimmten Reaktionsmomentkennlinie und/oder bestimmten Positionen auf einem zu montierenden Gegenstand festzuschrauben, **dadurch gekennzeichnet, dass** das System umfasst
- eine Prüfschraubverbindung (11), die ausgelegt ist, einen Antriebsteil (13) einer portablen Elektroschraubmaschine (12) aufzunehmen, wobei der Antriebsteil (13) ein Antriebsmoment (T) von der portablen Elektroschraubmaschine (12) bereitstellt;
- eine Antriebseinheit (20), die mit der portablen Elektroschraubmaschine (12) kommuniziert, die Verschaltung (22) zum Steuern der portablen Elektroschraubmaschine (12) umfasst, um eine Antwortphase mit Drehmomentrampe (T) im Zeitverlauf (t) zu simulieren, sodass das Drehmoment (T) im Zeitverlauf (t) ein Reaktionsmoment ergibt, das dem von der Bedienperson an einer realen Schraubverbindung wahrgenommenen Drehmoment äquivalent ist.

12. Computerprogrammprodukt, das ausführbaren Code (24) umfasst, der in der Verschaltung (22) der Antriebseinheit (20) nach Anspruch 11 gespeichert ist, wobei die Antriebseinheit (20), wenn der Code ausgeführt wird, die Schritte durchführt zum:
- Versorgen der portablen Elektroschraubmaschine (12) mit Energie, um eine Drehmomentrampenphase im Zeitverlauf zu simulieren, sodass die Bedienperson beim Auslösen der portablen Elektroschraubmaschine (12), um die Prüfschraubverbindung (11) festzuschrauben, ein resultierendes Reaktionsmomentverhalten von der Verbindung wahrnimmt.

## Revendications

1. Procédé pour évaluer une tension ergonomique, causée par un couple de réaction, subie par un opérateur lors de l'utilisation d'une boulonneuse électrique portable (12) pour serrer un joint à vis réel à un certain couple à un certain emplacement ou certains emplacements sur un objet à assembler,
**caractérisé par le fait que** le procédé comprend en outre les étapes :
- munir un montage d'essai, d'au moins un joint à vis d'essai (11) simulant le joint à vis sur l'objet à assembler, étape 201 ;
- commander la boulonneuse électrique portable (12) avec un dispositif d'unité d'entraînement électrique (20) pour simuler une phase de réponse de rampe de couple au cours du temps, de telle sorte que le couple au cours du temps fournit un couple de réaction équivalent à ce que l'opérateur aurait subi sur un joint à vis réel, étape 203a.

2. Procédé selon la revendication 1, dans lequel la rampe de couple est fournie par transformation de caractéristiques couple/angle en caractéristiques couple/temps, étape 203a.

3. Procédé selon la revendication 1, comprenant en outre les étapes :
- amener l'opérateur à indiquer la tension subie causée par le couple de réaction de la boulonneuse électrique portable (12) lors du serrage du joint à vis d'essai (11) du montage d'essai, étape 203b ;
- stocker des valeurs de paramètres de commande d'outil électrique adaptées, en vue d'une utilisation lors du serrage du joint à vis réel au niveau de l'objet à assembler, étape 203d.

4. Procédé selon la revendication 3, comprenant en outre les étapes :
- amener l'opérateur à indiquer la tension subie causée par le couple de réaction provenant de la boulonneuse électrique portable (12) lors du serrage du joint à vis d'essai (11) du montage d'essai, étape 203b ;
- transformer les caractéristiques couple/angle du joint réel et la vitesse de broche en couple/temps ;
- stocker des paramètres de commande correspondants dans l'unité de commande d'outil électrique pour évaluer la tension subie par l'opérateur, étape 203c ; et
- transformer, à l'inverse, les paramètres de commande obtenus/optimaux de nouveau en couple c. angle/vitesse d'angle, suivi par
- stocker des valeurs de paramètres de commande adaptées de boulonneuse électrique portable (12), en vue d'une utilisation lors du serrage du joint à vis réel au niveau de l'objet à assembler, étape 203d.

5. Procédé selon la revendication 1, comprenant l'étape supplémentaire, pendant une période de temps initiale particulière, de simulation de la période de descente pendant laquelle l'opérateur subit le processus de serrage d'un moyen de fixation dans des filets avant le serrage du joint, étape 202.

6. Procédé selon l'une quelconque des revendications 1 à 3, comprenant l'étape supplémentaire de simulation d'une séquence du joint à vis d'essai (11) comprenant une pluralité de joints à vis d'essai (11), chacun fournissant différentes réponses de couple de réaction, étape 204.

7. Procédé selon la revendication 4, comprenant les étapes :
- laisser l'opérateur appliquer un couple de serrage sur chacun des joints à vis du montage d'essai au moyen de la boulonneuse électrique portable, étape 204a ;
- amener l'opérateur à indiquer la tension subie causée par le couple de réaction provenant de la boulonneuse électrique portable (12) lors du serrage de chacun des joints à vis du montage d'essai, étape 204d ;
- adapter le développement des paramètres de sortie de la boulonneuse électrique portable (12) pendant le serrage de chaque joint à vis du montage d'essai pour rendre minimale la tension subie par l'opérateur, étape 204c ; et
- stocker le développement de paramètre de sortie optimal de la boulonneuse électrique portable (12) pour chaque joint à vis pour adapter le couple de réaction subi par l'opérateur pendant le serrage de chacun des joints à vis sur l'objet à assembler, étape 204d.

8. Procédé selon la revendication 4 ou 5, comprenant simuler une séquence d'au moins cinq joints à vis d'essai (11), étape 204.

9. Procédé selon l'une quelconque des revendications 1 à 5, comprenant l'étape d'adaptation de la phase de rampe de couple pour fournir une pluralité de valeurs de couple (T) suffisantes pour couvrir une plage de fonctionnement de la boulonneuse électrique portable (12).

10. Dispositif d'unité d'entraînement électrique (20) communiquant avec une boulonneuse électrique portable (12), ledit dispositif d'unité d'entraînement électrique (20) comprenant des circuits (22) configurés pour alimenter la boulonneuse électrique portable (12) pour simuler une phase de rampe de couple (T) au cours du temps (t), **caractérisé par le fait que**, lorsqu'un opérateur utilise la boulonneuse électrique portable (12) pour serrer au moins un joint à vis d'essai (11), situé sur un montage d'essai, avec certaines caractéristiques de réaction et/ou certains emplacements d'un objet à assembler, ledit opérateur subit une réponse de couple (T) de réaction résultante à partir du joint à vis d'essai (11) lors du déclenchement de la boulonneuse électrique portable (12) pour serrer le joint à vis d'essai (11).

11. Système pour évaluer la tension ergonomique subie par un opérateur utilisant une boulonneuse électrique portable de serrage de joint à vis (12) pour serrer un joint à vis réel, avec certaines caractéristiques de couple de réaction et/ou certains emplacements, sur un objet à assembler,
**caractérisé par le fait que** le système comprend
- un joint à vis d'essai (11) apte à recevoir une partie d'entraînement (13) d'une boulonneuse électrique portable (12), ladite partie d'entraînement (13) fournissant un couple d'entraînement (T) à partir de la boulonneuse électrique portable (12) ;
- une unité d'entraînement (20) communiquant avec la boulonneuse électrique portable (12), comprenant des circuits (22) pour commander la boulonneuse électrique portable (12) pour simuler une phase de réponse de rampe de couple (T) au cours du temps (t) de telle sorte que le couple (T) au cours du temps (t) donne un couple de réaction équivalent à ce que l'opérateur aurait subi sur un joint à vis réel.

12. Produit programme d'ordinateur comprenant un code exécutable (24) stocké dans les circuits (22) de l'unité d'entraînement (20) selon la revendication 11, lorsqu'il est exécuté l'unité d'entraînement (20) réalise les étapes :
- fournir de la puissance à la boulonneuse électrique portable (12) pour simuler une phase de rampe de couple au cours du temps, de telle sorte que l'opérateur subit une réponse de couple de réaction résultante à partir du joint lors du déclenchement de la boulonneuse électrique portable (12) pour serrer le joint à vis d'essai (11).
